# EUROPÄISCHE PATENTSCHRIFT

(11) **EP 3 390 977 B1**
(45) Veröffentlichungstag und Bekanntmachung des Hinweises auf die Patenterteilung: **30.06.2021**
(21) Anmeldenummer: 16804701.7
(22) Anmeldetag: 15.11.2016
(51) Int. Cl.: G01F 1/69, G01F 15/14, G01F 15/18, G01F 1/684

(54) **DURCHFLUSSMESSGERÄT**
FLOW METER
DEBITMÈTRE

(30) Priorität: 18.12.2015 DE 102015122224
(43) Veröffentlichungstag der Anmeldung: 24.10.2018
(73) Patentinhaber: Endress+Hauser Flowtec AG, 4153 Reinach (CH)
(72) Erfinder: GABERTHÜEL, Stephan, 4104 Oberwil (CH); GRÜN, Alexander, 79539 Lörrach (DE)
(74) Vertreter: Andres, Angelika Maria
(86) Internationale Anmeldenummer: PCT/EP2016/077760
(87) Internationale Veröffentlichungsnummer: WO 2017/102221

(56) Entgegenhaltungen:
- EP-A1- 0 882 958
- EP-A1- 2 827 108
- DE-A1-102007 010 912
- DE-A1-102013 209 176
- DE-T2- 69 410 061
- US-A1- 2004 216 532
- US-A1- 2015 027 233
- US-A1- 2015 027 235

## Beschreibung

Die vorliegende Erfindung betrifft ein Durchflussmessgerät nach dem Oberbegriff des Anspruchs 1.

Die konstruktive Ausgestaltung von thermischen Durchflussmessgeräten ist an sich bekannt. Ausgehend von einem meist zylindrischen Hohlkörper mit einer Grundfläche erstrecken sich zumindest zwei zylindrische Stifthülsen in Richtung des Innenraumes eines Rohres. Diese Stifthülsen sind jedoch zumeist durch Schweißnähte mit dem zylindrischen Hohlkörper verbunden. Ein typisches Beispiel ist in der DE 10 2010 061 731 A1 dargestellt und beschrieben.

Oft werden Verbindungen an Stößen durch Schweißen geschaffen. Je nach Stoßart können verschiedene Schweißnähte angewendet werden, die unterschiedliche Naht- oder Fugenform und verschiedenartigen Nahtaufbau haben. Man unterscheidet Stumpf- und Kehlnähte. In Stumpfnähten verlaufen die Kraftlinien mit relativ gleichmäßiger Spannungsverteilung, während bei Kehlnähten die Kraftlinien umgelenkt werden, was zu Spannungsspitzen führt.

Im Bereich der thermischen Durchflussmessung hat das übliche Vorgehen des Fügens und anschließenden Schweißens Nachteile, da sich am Spalt bzw. Stoß die Wärmeübergänge bei Temperaturwechsel ändern. Dies kann zu Messfehlern führen.

Daher empfiehlt sich die Fertigung als monolithisches Sensorgehäuse. Derartige Bauteile mit komplizierten Formen und mit funktionalen Eigenschaften lassen sich durch sogenannte generative Fertigungsverfahren realisieren. Derartige Fertigungsverfahren beruhen auf einem partiellen oder vollständigen Verschmelzen von granularem Material, z.B. Metallpulver und Metallkörner. Hierfür kann z. B. das sogenannte SLM-Verfahren genutzt werden. Alternativ kann ein derartiges monolithisches Bauteil mittels eines sogenannten MIM-Verfahrens (metal injection molding) hergestellt werden.

Im Bereich der Durchflussmessung können derartige Bauteile als Anbindungsbauteile zwischen messsignalgebenden Sensorelementen (Heizvorrichtungen, Temperatursensoren, Ultraschallwandlern und DSC-Sensoren) eingesetzt werden.

Allerdings müssen Sensorgehäuse gewissen Druckanforderungen standhalten. Die Sensorgehäuse müssen einen statischen Druck von bis zu 40 bar standhalten. Es bestehen jedoch Bedenken, dass Bauteile, welche nicht nach standardisierten Verfahren gefertigt sind, derartigen Druckanforderungen standhalten. Dies betrifft insbesondere Bauteile die nach dem MIM oder SLM-Verfahren gefertigt wurden.

Die DE 10 2007 010 912 A1 offenbart ein thermisches Durchflussmessgerät mit einem als mechanisches Drehstück ausgestalteten Sensorhalter, in dem Temperatursensoren fixiert sind. Der Sensorhalter weist Aussparungen auf, die so ausgestaltet sind, dass durch das fließende Medium erzeugte Schallwellen in den Aussparungen stehende Schallwellen ausbilden und somit gedämpft werden. Dieser Erfindung nachteilig ist jedoch, dass die Form des Sensorhalters durch das offenbarte Herstellungsverfahren stark eingeschränkt ist.

Die DE 694 10 061 T2 offenbart eine Flüssigkeitsmessvorrichtung, die dazu eingerichtet ist neben der Durchflussmenge auch den Druck des Messmediums zu ermitteln. Dazu besteht die Vorrichtung aus einem mechanischen Sockel, an dem der Druckaufnehmer und die Thermistoren angebracht sind, und einer Kappe die den Mediumsdruck zum Druckaufnehmer weiterleitet und die Vorrichtung abdichtet. Ein Nachteil der Erfindung besteht darin, dass die Kappe nicht drucktragend ist und somit den Mediumsdruck direkt an den mechanischen Sockel weiterleitet.

In der EP 0 882 958 A1 wird eine in der Wandung eines Behälters eingesetzte und in das Innere des Behälters ragende Füllstands-Überwachungsanordnung mit zwei in einem Gehäuse angeordneten Ultraschallwandlern gezeigt. Dabei ist das Gehäuse als Anbindungselement zur Fixierung in der Wandung des Behälters ausgestaltet.

Die US 2004/0216532 A1 offenbart ein Vortex-Durchflussmessgerät mit einem an ein Anbindungselement befestigten Leitflügel, wobei das Anbindungselement für eine Verbindung und Fixierung des Leitflügels an das Gehäuse des Durchflussmessgerätes sorgt.

Die DE 10 2013 209 176 A1 lehrt die Verwendung eines generativen Schichtbauverfahrens zur Herstellung einer Mehrlochsonde. Vorrichtungen, die mittels eines generativen Schichtbauverfahrens hergestellt sind, weisen jedoch eine hohe Druckempfindlichkeit auf.

Die vorliegende Erfindung setzt daher bei der Aufgabe an, die Struktur des Sensorgehäuses, das in einer Hochdruckumgebung verwendet wird, zu vereinfachen.

Die Erfindung löst diese Aufgabe durch ein Durchflussmessgerät mit den Merkmalen des Anspruchs 1.

Ein erfindungsgemäßes Durchflussmessgerät umfasst einen messsignalerzeugendes Sensorelement, ein metallisches Anbindungselement, welches das messsignalerzeugende Sensorelement mit einer Öffnung oder mit einem Sensorstutzen eines Rohres verbindet und ein drucktragendes Bauteil.

Ein erfindungsgemäßes Durchflussmessgerät ist ein thermisches Durchflussmessgerät.

Ein messsignalerzeugendes Sensorelement ist für ein thermisches Durchflussmessgerät eine Heizvorrichtung und/oder ein Temperatursensor zur Ermittlung der Temperatur eines Messmediums. Beide Sensorelemente können jeweils ein beheizbares Widerstandsthermometer, z.B. ein Pt 100 - oder Pt 1000 - Element sein.

Das Anbindungselement ermöglicht die Anbindung des messsignalerzeugenden Sensorelements mit dem Rohr, insbesondere mit einer im Rohr befindlichen Öffnung oder mit einem Sensorstutzen. Die Anbindung an das Rohr kann durch das Anbindungselement direkt oder durch das Anbindungselement in Verbindung mit weiteren Bauteilen, insbesondere durch ein drucktragendes Bauteil, erfolgen.

Das Anbindungselement kann zudem vorteilhaft weitere Funktionen erfüllen. Es kann beispielsweise in der Form eines Sensorgehäuses ausgebildet sein zum Schutz der messsignalerzeugenden Sensorelemente. Bei einem thermischen Durchflussmessgerät empfiehlt es sich das Sensorgehäuse mit zwei Stifthülsen auszugestalten, welche sich ausgehend von einem Hohlkörper in das Lumen des Rohres erstrecken. Das Sensorgehäuse kann für einen optimalen Wärmeübergang eine zumindest bereichsweise vergleichsweise dünne Gehäusewandung aufweisen. Üblicherweise werden Stifthülsen mit dem Hohlkörper verschweißt. Im Rahmen der vorliegenden Erfindung kann allerdings ein monolithisches Sensorgehäuse bzw. ein monolithisches Anbindungselement verwandt werden, bei welchem die Stifthülsen verbindungsnahtfrei, insbesondere schweißnahtfrei, mit dem Hohlkörper verbunden sind. Dadurch werden definierte Wärmeübergänge geschaffen.

Das Anbindungselement ist erfindungsgemäß mit dem drucktragenden Bauteil verbunden, welches Teil des Durchflussmessgeräts ist. Das drucktragende Bauteil umfasst eine Hülse. Die Hülse kann je nach Form der Öffnung des Rohres oder des Sensorstutzens des Rohres eine variable Hülsen-Mantelform aufweisen. Dies kann z.B. eine Zylindermantelfläche sein. Allerdings ist es auch möglich eine Prismenmantelfläche vorzusehen. Der Querschnitt der Hülse kann z.B. kreisförmig oder rechteckig ausgebildet sein.

An oder in der Hülse ist eine Wandung angeordnet, welche dem Bauteil zugeordnet ist. Die Wandung kann als ebene Platte oder gebogen bzw. kuppelförmig ausgebildet sein. Sie erstreckt sich über den gesamten Querschnitt der Hülse. Der Querschnitt muss dabei nicht zwingend auf einer Ebene senkrecht zur Längsachse des Rohres liegen, sondern der Querschnitt ist als Parallelprojektion entlang einer Ebene senkrecht zur Längsachse zu verstehen. Somit sind auch gebogene oder schräg in der Hülse angeordnete Wandungen vom Gegenstand der vorliegenden Erfindung erfasst.

Das drucktragende Bauteil weist zumindest eine Kabeldurchführung auf. Diese Kabelführung kann vorzugsweise als eine Öffnung durch die Wandung ausgebildet sein.

Zudem weist das drucktragende Bauteil eine Vergussmasse auf, wobei die Vergussmasse die Hülse teilweise oder vollständig ausfüllt. Die Vergussmasse verhindert den Austritt von Messmedium aus der Öffnung und/oder dem Sensorstutzen bei einem Materialversagen des Anbindungselements unter hohem Druck. Entsprechend sichert das drucktragende Bauteil bei höheren Drücken, z.B. bei Drücken von bis zu 40 bar, vor dem Austritt des Messmediums. Hierfür ist das drucktragende Bauteil in der Öffnung des Rohres und/oder im Sensorstutzen, bezogen auf die Längsachse des Rohres, radial hinter dem Anbindungselement angeordnet.

Vorzugsweise kann das metallische Anbindungselement in einem generativen Fertigungsverfahren z.B. aus einem granularen Material, gefertigt sein. Die Art des

Fertigungsverfahrens kann bekannterweise bei metallischen Werkstoffen anhand des Schliffbildes ermittelt werden.

Alternativ kann das metallische Anbindungselement in einem MIM-Verfahren hergestellt sein. Auch hier kann das Fertigungsverfahren anhand des Schliffbildes ermittelt werden.

So kann auch bei Materialversagen des Anbindungselements ein Austritt des Messmediums sicher verhindert werden.

Das Durchflussmessgerät ist als ein thermisches Durchflussmessgerät ausgebildet. Das monolithische metallische Anbindungselement kann vorteilhaft als ein Sensorgehäuse eines thermischen Durchflussmessgeräts ausgebildet sein, mit einem Hohlkörper und zwei Stifthülsen welche aus dem Hohlkörper hervorstehen.

Das Anbindungselement in seiner Ausgestaltung als metallisches Sensorgehäuse weist einen Hohlkörper zum Anschluss an eine Einsteckvorrichtung und/oder eine Rohrwandung auf. Eine Einsteckvorrichtung kann z.B. ein Gestänge sein, an dessen Ende das vorgenannte Sensorgehäuse angeordnet ist. Dieses Gestänge wird sodann durch eine Öffnung, die zumeist im Schwerefeld am obersten Punkt eines Rohres angeordnet ist, in das Rohr eingeführt und in einer Öffnung befestigt. Die zur Umwelt begrenzende Wandung des Sensorgehäuses ist somit teilweise oder vollständig einer im Rohr befindlichen Strömung des Messmediums ausgesetzt. Alternativ zur Einsteckvorrichtung kann das metallische Sensorgehäuse auch direkt oder mittels einer Rohrverlängerung fest an einer Rohrwandung fixiert sein. Die Art der Festlegung des Sensorgehäuses bzw. des Hohlkörpers ist im Rahmen der vorliegenden Erfindung jedoch nur von nachrangiger Bedeutung.

Der vorgenannte Hohlkörper weist eine Grundfläche auf. Diese Grundfläche kann beispielsweise eben oder gewölbt ausgebildet sein.

Das Sensorgehäuse weist zumindest zwei Stifthülsen auf, welche ausgehend von der Grundfläche in den Innenbereich eines Rohres hineinragen. Die Stifthülsen können z.B. zylindrisch oder prismatisch ausgebildet sein.

Das metallische Sensorgehäuse ist einstückig ausgebildet und
die Stifthülsen und der Hohlkörper sind nahtfrei miteinander verbunden. Bislang war es üblich die Stifthülsen mit dem Hohlkörper zu fügen und anschließend zu verschweißen. Bei diesen Konstruktionen wurde ein Wärmeübergang geschaffen, welcher sich bei Temperaturwechsel des Mediums ändert und produktionsbedingt nicht für jedes Sensorgehäuse reproduzierbar ist. Dies kann zu einem Messfehler führen, der für jedes Sensorgehäuse individuell groß ist.

Nahtfrei bedeutet im Kontext der vorliegenden Erfindung, dass weder eine Schweißnaht noch eine Klebe- oder Lötnaht als Verbindung zwischen den Stifthülsen und dem Hohlkörper vorhanden ist.

Vorteilhafte Ausgestaltungen der Erfindung sind Gegenstand der Unteransprüche.

Das drucktragende Bauteil kann zumindest ein Elektronikbauteil aufweisen, welches in der Vergussmasse eingebettet ist. Dadurch wird dieses Bauteil zusätzlich in seiner Form- und Druckstabilität verbessert.

Besonders bevorzugt kann das monolithische metallische Anbindungselement durch ein generatives Fertigungsverfahren aus einem granularen metallischen Material hergestellt sein oder alternativ mittel eines MIM-Urformverfahrens hergestellt sein. Derartige Materialien erlauben die Gestaltung von geometrisch komplizierten metallischen Bauteilen. Allerdings wird derzeit die Gefahr eines druckbedingten Materialversagens gegenüber vergleichbaren Bauteilen, die nach traditionellen Fertigungsverfahren hergestellt sind, als höher eingestuft. Um auch bei der Durchflussmessung die benötigten Druckerfordernisse zu erfüllen, empfiehlt sich der Einsatz des erfindungsgemäßen drucktragenden Bauteils.

Zur zusätzlichen Sicherung der Vergussmasse vor einem Herausdrücken aus der Hülse kann das drucktragende Bauteil vorteilhaft Hinterschneidungen an der Innenfläche der Hülse zur Verankerung der Vergussmasse aufweisen.

Eine besonders druckstabile Bauweise des drucktragenden Bauelements kann vorteilhaft erreicht werden, wenn die Wandstärke der Wandung zum Durchmesser des Hülsenquerschnitts der Hülse ein Verhältnis von vorzugsweise zumindest 1 zu 30, besonders bevorzugt von zumindest 1 zu 10, aufweist.

Die Kabeldurchführung kann zumindest als ein Loch in der Wandung ausgebildet sein, welches Loch einen mittleren Lochdurchmesser von 0,2 bis 1,5 mm aufweist.

Das druckfeste Bauteil kann vorteilhaft in der Öffnung des Rohres und/oder im Sensorstutzen eingeschweißt und/oder eingeschraubt sein.

Nachfolgend werden weitere vorteilhafte Ausgestaltungsvarianten eines Anbindungselements beschrieben, welche besonders bevorzugt in der Ausgestaltung eines erfindungsgemäßen Durchflussmessgeräts als ein thermisches Durchflussmessgerät eingesetzt werden.

Es ist von Vorteil, wenn das metallische Sensorgehäuse als ein monolithisches Bauteil ausgebildet ist. Das bedeutet, dass das Sensorgehäuse aus komplett einem Material gefertigt ist. Zwar sind durch generative Fertigungsverfahren auch Kombinationen aus mehreren Metallen oder Metalllegierungen, z.B. Stahl und Titan, realisierbar, diese sind im Rahmen der vorliegenden Erfindung umfasst, jedoch gegenüber der monolithischen Ausführung nicht bevorzugt.

Es ist von Vorteil, wenn jede der Stifthülsen jeweils einen endständigen Abschnitt mit einer mediumsberührenden Stirnfläche aufweist und dass in einer ersten der beiden Stifthülsen, insbesondere in dem endständigen Abschnitt dieser Stifthülse, ein Heizer angeordnet ist und dass in einer zweiten der beiden Stifthülsen, insbesondere in dem endständigen Abschnitt dieser Stifthülse, ein Temperatursensor zur Ermittlung der Mediumstemperatur angeordnet ist. Diese Ausgestaltung beschreibt ein typisches thermisches Durchflussmessgerät mit einem Heizer und einem Temperatursensor, welche größtenteils thermisch voneinander entkoppelt, in zwei gesonderten metallischen Stifthülsen gelagert sind. Diese werden oft auch als Sensorelemente bezeichnet. Oftmals werden als Heizer und als Temperatursensor zwei artgleiche beheizbare Widerstandsthermometer, z.B. PT100-Sensoren eingesetzt, von denen ein Widerstandsthermometer aktiv beheizt und folglich als Heizer eingesetzt wird. Diese Sensorelemente ermöglichen die Durchflussmessung. Ein derart ausgestaltetes Durchflussmessgerät ist an sich bekannt und wird seit vielen Jahren kommerziell vertrieben, allerdings sind die zumeist zylindrischen Stifthülsen mit den entsprechenden beheizbaren Widerstandsthermometern in den bisherigen Varianten des Standes der Technik stets mit dem Hohlkörper verschweißt. In einer bevorzugten erfindungsgemäßen Variante können auch mehrere beheizbare Widerstandsthermometer in eine Hülse eingebracht werden.

Es ist von Vorteil, wenn die Stifthülsen des thermischen Durchflussmessgerätes zumindest in dem endständigen Abschnitt eine Wandstärke von weniger als 0,5 mm, vorzugsweise zwischen 0,1-0,4 mm, aufweist. Durch die sehr dünne Wandstärke erfolgt ein schnelles Ansprechen des Sensors bei Änderung der Durchflussgeschwindigkeit.

Ein thermisches Durchflussmessgerät weist stets eine gewisse Empfindlichkeit auf die Umgebungstemperatur auf. Auch die möglichst optimale Wärmeverteilung z.B. der vom Heizer ausgestrahlten Wärme, entlang der Metallwandung der Stifthülse ist bevorzugt. In diesem Kontext ist es von Vorteil, wenn die Wandstärke, zumindest im Bereich des endständigen Abschnitts, um weniger als 20%, vorzugsweise um weniger als 10%, variiert.

Ein gutes Ansprechverhalten bei gleichzeitiger guter thermischer Entkopplung zwischen Heizer und Temperatursensor kann erreicht werden, wenn die beiden vorgenannten Stifthülsen besonders dünn und lang ausgestaltet sind. Es ist von Vorteil, wenn endständige Abschnitt der Stifthülse eine zylindrische Mantelfläche aufweist mit einem Durchmesser d1 und dass sich der endständige Abschnitt über eine Länge l2 erstreckt, dadurch gekennzeichnet, dass das Verhältnis l2/d1 größer oder gleich 5, vorzugsweise größer oder gleich 7, ist. Derartige Stifthülsen, welche zudem einstückig und nahtfrei in einem Sensorgehäuse integriert sind, sind bislang nicht bekannt.

Für eine Druckstabilität und chemische Stabilität ist es von Vorteil, wenn das Sensorgehäuse aus Stahl und/oder Titan und/oder Hastelloy besteht.

Das Sensorgehäuse kann vorzugsweise zumindest drei Stifthülsen, also die erste, die zweite und vorzugsweise eine dritte Stifthülse, aufweisen, welche vorzugsweise parallel zueinander verlaufen. Zwei der Stifthülsen können, wie zuvor beschrieben, mit einem Heizer und einem Temperatursensor zur Ermittlung der Mediumstemperatur ausgestattet sein. Sie ermöglichen die Durchflussmessung in an sich bekannter Weise. Die dritte Sensorhülse kann ebenfalls einen Heizer, vorzugsweise in analoger Ausgestaltung zum Heizer, der beiden anderen Stifthülsen aufweisen. Beispielsweise bei ungleichmäßiger Anschmutzung oder Korrosion der jeweiligen Stifthülsen wird die Ermittlung und/oder Kompensation eines Sensordrifts vorteilhaft ermöglicht. Diese zusätzliche Stifthülse kann dabei ebenfalls vorteilhaft einstückig und nahtlos mit dem Hohlkörper verbunden sein.

Es ist von Vorteil, wenn das Sensorgehäuse ein Strömungshindernis aufweist, welches derart zu einer der drei vorgenannten Stifthülsen angeordnet ist, dass eine der Stifthülsen, ausgehend bei Anströmung des Sensorgehäuses, aus einer vorbestimmten Strömungsrichtung teilweise oder vollständig im Strömungsschatten des Strömungshindernisses liegt, während die anderen beiden Stifthülsen außerhalb des Strömungsschattens angeordnet sind. Vorzugsweise ist in der dritten Stifthülse ein Heizer angeordnet. Dieser erlaubt eine Richtungserkennung je nachdem, ob die Strömung des Messmediums aus der vorgenannten Strömungsrichtung und dadurch die Anströmung und der Abtransport der Wärme des Heizers durch das Strömungshindernis behindert wird, oder ob die Strömungsrichtung des Messmediums entgegengesetzt zur oben genannten Strömungsrichtung ist. In letzterem Fall liegt die dritte Stifthülse nicht im Strömungsschatten des Strömungshindernisses.

Das Strömungshindernis kann vorzugsweise als eine prismenförmige Stifthülse, z.B. mit dreieckigem Querschnitt, ausgestaltet sein, welche besonders bevorzugt parallel zu den anderen drei Stifthülsen verläuft.

Die dritte Stifthülse und/oder das stiftförmige Element können ausgehend von der Grundfläche des Hohlkörpers in den Innenbereich des Rohres hineinragen und nahtfrei mit dem Hohlkörper verbunden sein, wobei die Gesamtlänge der dritten Stifthülse und/oder des Strömungshindernisses vorzugsweise geringer ist als die Gesamtlänge der ersten beiden Stifthülsen. Dadurch beeinflusst der Heizer im dritten Sensorelement nicht die Durchflussmessung, da er auf einer anderen Ebene senkrecht zur Längsachse des Sensorgehäuses angeordnet ist als der Heizer und der Temperatursensor der ersten beiden Stifthülsen.

Das Sensorgehäuse weist vorzugsweise einen bogenförmigen Bügel auf, welcher zumindest die erste und zweite Stifthülse überspannt und welcher vorzugsweise mit dem Hohlkörper verbunden ist. Dieser Bügel dient der Strömungsführung. Die Anordnung der zumindest zwei Stifthülsen kann eine Verbindungsachse ausbilden, welche in einer Symmetrieebene liegt. Der Bügel liegt vorzugsweise ebenfalls auf dieser Symmetrieebene und ist symmetrisch entlang dieser Symmetrieebene ausgebildet.

In einer bevorzugten Ausführungsvariante ist der Bügel nahtfrei mit dem Hohlkörper verbunden.

Die Länge des endständigen Abschnitts beträgt vorteilhaft zumindest 2 mm, vorzugsweise 3-10 mm, die Gesamtlänge einer Stifthülse beträgt vorzugsweise zumindest 10 mm. Entsprechend lange Stifthülsen ermöglichen eine besonders gute thermische Entkopplung. Das Sensorgehäuse des erfindungsgemäßen Durchflussmessgerätes kann mittels eines generativen Fertigungsverfahrens, vorzugsweise mittels eines Strahlschmelzverfahrens hergestellt werden. Zwar sind entsprechende Sensorgehäuse auch über andere Fertigungsverfahren, so z.B. durch Urformverfahren, insbesondere durch das Metal Injection Molding realisierbar, allerdings hat sich gezeigt, dass besonders gute Fertigungstoleranzen und besonders dünnwandige Bauteile mit den vorgenannten bevorzugten Fertigungsverfahren erreichbar sind.

Nachfolgend wird die Erfindung anhand eines Ausführungsbeispiels für ein thermisches Durchflussmessgerät und unter Zuhilfenahme der beigefügten Zeichnungen näher erläutert. Diese Beschreibung und die Figuren sind exemplarisch zu verstehen und in keinster Weise einschränkend für den Schutzbereich der vorliegenden Erfindung. Es zeigen:

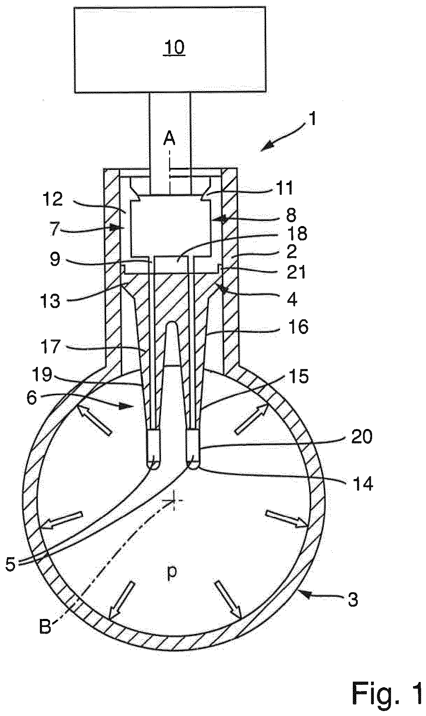

- Fig. 1: Schnittansicht eines Sensorgehäuses eines erfindungsgemäßen thermischen Durchflusssensors.

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Im Bereich der thermischen Durchflussmessung wird das aktive Sensorelement auch oft Heizer genannt. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung. Die Heizleistung kann durch einen sogenannten Leistungskoeffizienten PC beschrieben werden.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

In Fig. 1 ist eine erfindungsgemäße Variante eines thermischen Durchflussmessgerätes 1 näher dargestellt. Dabei erkennt man insbesondere ein Gehäuse eines Messaufnehmers des thermischen Durchflussmessgerätes 1, welches nachfolgend als Sensorgehäuse 4 bezeichnet wird. Dieses Sensorgehäuse 4 ist aus Metall gefertigt und kann als Einstecksensor ausgebildet sein und beispielsweise in einem Sensorstutzen 2 eines Rohres 3 oder in einem Loch eines Rohres 3 angeordnet sein. Dieses Rohr 3 kann ein Messrohr sein oder kann einer bestehenden Rohrleitung zugeordnet sein.

Zusätzlich zum Messaufnehmer weist das thermische Durchflussmessgerät 1 auch eine Auswerteeinheit 10 auf, welche üblicherweise ein Teil eines Messwandlers sein kann.

Das nachfolgend beschriebene Sensorgehäuse 4 eines Messaufnehmers stellt lediglich eine besonders bevorzugte Ausführungsvariante der Erfindung dar.

Das Sensorgehäuse 4 weist einen Hohlkörper 13 auf, welcher direkt in dem Sensorstutzen 2 angeordnet sein kann.

Der Hohlkörper 13 weist eine gebogene Grundfläche auf, ausgehend von welcher zumindest zwei, eine erste und eine zweite, Stifthülsen 6 in das Lumen, also das Innere des Rohres 3 hineinragen.

Der Hohlkörper 13 ist in der Ausführungsvariante der Fig. 1 kuppelförmig dargestellt. Er kann allerdings auch eine andere Form aufweisen und beispielsweise zylindrisch, kegelstumpf- oder pyramidenstumpfförmig ausgebildet sein.

In Fig. 1 sind insgesamt zwei Stifthülsen 6 dargestellt. Es können aber auch weitere Stifthülsen, z.B. drei oder vier Stifthülsen, vorgesehen sein, wobei das Durchflussmessgerät vorzugsweise weitere Funktionalitäten, z.B. Drifterkennung und Richtungserkennung, in einem thermischen Durchflussmessgerät vereinigen kann.

Die vorliegende Erfindung kann in einer vereinfachten Ausführungsvariante auch lediglich die zwei Stifthülsen 6 aufweisen. Die Stifthülsen 6 sind mit dem Hohlkörper 13 einstückig und verbindungsnahtfrei, insbesondere im Verbindungsbereich verbunden. Als Verbindungsnaht im Sinne der vorliegenden Erfindung ist eine Schweißnaht, Klebenaht, Lötnaht und dergleichen zu verstehen. Besonders bevorzugt ist das Gehäuse, also die Gesamtheit aus Stifthülsen und Hohlkörper, monolithisch ausgebildet.

Die erste und zweite Stifthülse 6 weisen jeweils eine mediumsberührende Stirnfläche 14 auf. Diese ist in Fig. 1 gewölbt, kann allerdings auch eben ausgebildet sein.

Jede der beiden Stifthülsen weisen, insbesondere im Bereich der mediumsberührenden Stirnfläche 14, ein Sensorelement 5 auf, welches im Inneren der jeweiligen Stifthülse 6 angeordnet ist. Ein erstes Sensorelement 5 ist dabei als Heizelement ausgebildet und ein zweites Sensorelement 5 ist als Temperatursensor, zur Ermittlung der Mediumstemperatur ausgebildet. Beide Sensorelemente können als beheizbarer Temperatursensor, z.B. ein Pt-100 oder Pt-1000 Widerstandstemperatursensor ausgebildet sein.

Die Stifthülsen 6 können jeweils gestuft ausgebildet sein, wodurch ein besseres Einführen und Positionieren der Sensorelemente 5 in der Stifthülse 6 durch die endständige Öffnung auf der mediumsabgewandten Seite der Stifthülse 6 erfolgen kann.

Die Stifthülse 6 ist dem Sensorgehäuse 4 zugeordnet, welches im Rahmen der vorliegenden Erfindung als Anbindungselement zu verstehen ist, welches die Sensorelemente 5 mit dem Sensorstutzen 2 verbindet.

Die geometrische Ausgestaltung einer jeweiligen Stifthülse 6 ist dergestalt, dass ausgehend von der Stirnfläche 14 zunächst ein erster Abschnitt 20 mit zylindrischer Stifthülsenwandung und einem ersten kontinuierlichen Zylindermanteldurchmesser d1 folgt. Nach einer Stufung 15 folgt ein zweiter Abschnitt 19 mit einer zylindrischen Stifthülsenwandung und einem zweiten kontinuierlichen Zylindermanteldurchmesser d2. Der zweite Abschnitt kann beispielsweise auch eine konische Form aufweisen. In dieser Variante entspricht der Durchmesser d2 einem gemittelten Wert.

Auf den zweiten Abschnitt 19 folgt sodann ein dritter Abschnitt 16 mit einer konischen Form. Der Übergangsbereich zwischen dem ersten und dem zweiten Abschnitt 19 und 20 ist nicht abrupt, sondern weist ein kontinuierliches Anwachsen des Durchmessers vom ersten Durchmesser d1 auf einen zweiten Durchmesser d2 auf. Es handelt sich bei einer entsprechenden Stufung 15 daher nicht um einen abrupten, sondern einen allmählichen Wechsel des Durchmessers. Sodann geht die Stifthülse in den dritten Abschnitt 16 über, welcher kegelstumpfförmig ausgebildet ist und bei welchem der Durchmesser d allmählich im Verlauf des Kegelstumpfs bis zu einem Übergangsbereich zum Hohlkörper 13 allmählich anwächst. Die Stifthülsen 6 weisen eine Länge l1 von zumindest 10 mm auf.

Durch die gestufte Bauweise der Stifthülsen kann vorteilhaft eine höhere Steifigkeit der Stifthülsen erzielt werden.

Dem Abschnitt 20 ist gemäß der Definition der vorliegenden Erfindung die Stirnfläche 14 zugeordnet. In diesem Abschnitt 20 eines ersten der beiden Stifthülsen 6 ist jeweils ein Sensorelement 5 angeordnet. Das Sensorelement, insbesondere das Heizelement, muss nicht zwingend an der Stirnfläche 14 oder Zylindermantelfläche der Stifthülse anliegen, sondern kann vorzugsweise über eine Kupferbrücke mit der Wandung der Stifthülse thermisch gekoppelt sein. Gleiches gilt auch für die weiteren optionalen Stifthülsen. Eine entsprechende Anordnung und deren Vorteile sind in der DE 10 2008 015 359 A1 im Detail beschrieben.

Im Abschnitt 20 der zweiten der beiden Stifthülsen 6 ist ein Temperatursensor zur Ermittlung der Mediumstemperatur angeordnet. Dieser kann ebenfalls als beheizbares Widerstandsthermometer ausgebildet sein, wobei im Betrieb des thermischen Durchflussmessgerätes 1 vorzugsweise jeweils eines der Widerstandsthermometer aktiv beheizt und eines der Widerstandsthermometer unbeheizt betrieben werden kann.

Die Wandstärke der Stifthülsen 6 beträgt zumindest im Abschnitt 20 weniger als 0,5 mm, vorzugsweise weniger oder gleich wie 0,4 mm, insbesondere 0,1 bis 0,4 mm. Aufgrund der dünnen Wandstärke kann ein besonders günstiger Wärmeübergang erreicht werden.

Die Länge l2 dieses Abschnitts 20 kann zumindest 2 mm, vorzugsweise jedoch 3-10 mm betragen.

Das Verhältnis der Länge l2 zum Durchmesser d1 ist für den ersten Abschnitt 20 vorzugsweise größer als 5, besonders bevorzugt gleich oder größer als 7.

In einer bevorzugten Ausführungsvariante der Erfindung beträgt das durchschnittliche Verhältnis d_{Mittelwert}/l1 für die gesamte Stifthülse, vorzugsweise größer als 4, wobei sich der Durchmesser immer auf die jeweilige Länge des Abschnitts der Stifthülse bezieht, in welchem der Durchmesser tatsächlich vorhanden ist. Im Falle eines Kegelstumpfes, wie in Abschnitt 16, kann eine Mittelwertbildung der Durchmesser erfolgen.

Das Sensorgehäuse 4 ist aus Metall gefertigt. Als besonders bevorzugtes Metall kann Stahl, insbesondere Edelstahl, oder Hastelloy genutzt werden. Alternativ kann, z.B. für starckorrosive Medien, auch Titan als Wandungsmaterial genutzt werden.

Bevorzugt ist das Sensorgehäuse 4 monolithisch gefertigt. Dadurch wird ein definierter Wärmeübergang erzielt.

Zusätzlich kann das Sensorgehäuse 4 sodann noch mit einer metallischen Außenbeschichtung versehen werden, um ggf. die Widerstandsfähigkeit gegenüber bestimmten Medien zu erhöhen. Diese Außenbeschichtung zählt gemäß der vorliegenden Erfindung jedoch nicht zum Gehäuse 2, sondern als zusätzlich auf das Gehäuse 4 aufgebrachte Materiallage.

Das Sensorgehäuse 4 ist besonders bevorzugt in einem generativen Fertigungsverfahren fertigbar. Besonders bevorzugt sind dabei Strahlschmelzverfahren, wie z.B. das selektive Laserschmelzen, welches auch als SLM-Verfahren bekannt ist, um einen derartigen Gegenstand mit entsprechend dünner Wandstärke und entsprechender Länge der Stifthülsen zu fertigen.

Beim SLM-Verfahren kann ein Metallpulver in einer dünnen Schicht auf eine Oberfläche aufgebracht werden. Das Metallpulver wird sodann durch Laserstrahlung lokal vollständig geschmolzen und erstarrt zu einer festen Materialschicht in einer Schichtdicke von typischerweise 15-150 µm. Sodann wird die Oberfläche um den Betrag der Schichtdicke abgesenkt und eine neue Materialschicht aufgetragen. Auf diese Weise bildet sich allmählich das Gehäuse 4 des Messaufnehmers heraus. Materialspannungen und korrosionsanfällige Nahtstellen sind dabei nicht vorhanden.

Das erfindungsgemäße thermische Durchflussmessgerät 1 weist zudem ein drucktragendes Bauteil 7 auf, welches sich an einer Schnittstelle 21 an den Hohlkörper 13 anschließt. Das drucktragende Bauteil weist vorzugsweise eine Verformungsstabilität, zumindest bis zu einem Maximaldruck von 40 bar, auf.

Das drucktragende Bauteil 7 weist eine Hülse12 mit einer Längsachse A auf und eine Wandung 18 welche sich über den gesamten Querschnitt der Hülse 12 erstreckt. Die Hülse kann vorzugsweise einen kreisförmigen oder rechteckigen Querschnitt aufweisen. Sie kann besonders bevorzugt eine zylindrische Form aufweisen.

Die Flächennormale der Wandung 18 kann vorzugsweise parallel zur Längsachse A der Hülse 12 erstrecken. Die Wandung 18 kann allerdings auch schräg in der Hülse 12 angeordnet sein.

Die Stirnfläche und die Wandung 18 müssen nicht zwingend endständig an der Hülse 12 angeordnet sein, sondern sie können auch beispielsweise in der Mitte der Hülsenform des ringförmigen Wandungsbereichs angeordnet sein und sich dort über den gesamten Querschnitt erstrecken.

In der Hülse 12 sind vorzugsweise Elektronikbauteile, so z.B. Platinen und dergleichen, angeordnet. Diese Elektronikbauteile sind in einer Vergussmasse 8 eingebettet. Die Vergussmasse 8 füllt insbesondere die Hülse 12 teilweise oder vollständig aus. In der Wandung 18 ist zumindest ein Loch oder es sind mehrere Löcher als Kabeldurchführungen 9 angeordnet. Diese dienen der Durchführung einer oder mehrerer Signalleitungen und/oder Energieversorgungsleitungen 17 zwischen den Sensorelementen 5 und der Auswerteeinrichtung 10. Die Löcher können vorzugsweise einen mittleren Lochquerschnitt zwischen 0,2 und 1,5 mm aufweisen.

Zur Positionssicherung der Vergussmasse 8 weist die Hülse 12 an der Innenseite eine Hinterschneidung 11 auf. Alternativ oder zusätzlich zu den Hinterschneidungen kann die Hülse 12 zur Verankerung der Vergussmasse 8 Rillen und/oder ein Gewinde aufweisen. Zugleich wird eine bessere Dichtung der Vergussmasse erreicht.

Die Wandstärke der Wandung 18 weist bezogen auf einen Durchmesser des Hülsenquerschnitts der Hülse 12 von vorzugsweise zumindest 1 zu 30 auf. Besonders bei einer kuppelförmigen Form der Wandung 18 kann eine geringere Wandstärke gewählt werden als bei einer ebenen Form der Wandung 18.

Die Wandstärke der Wandung 18 weist bei einer ebenen Form bezogen auf einen Durchmesser des Hülsenquerschnitts der Hülse 12 von vorzugsweise zumindest 1 zu 20, besonders bevorzugt von zumindest 1 zu 10, auf.

So kann die Wandung 18 eine Wandstärke von vorzugsweise zumindest 0,5 mm und besonders bevorzugt von 1 bis 2 mm aufweisen.

Die eine oder mehrere Öffnungen bzw. Löcher der Kabeldurchführung 9 können vorzugsweise ebenfalls mit Vergussmasse 8 gefüllt sein.

Die Vergussmasse kann beispielsweise auf Basis eines Epoxids ausgebildet sein.

Die Hülse 12 und die Wandung 18 sind vorzugsweise aus einem Metall gebildet und besonders bevorzugt aus Edelstahl oder Hastelloy. Sie ist vorzugsweise monolithisch aufgebaut.

In Fig. 1 sind die beiden messsignalerzeugenden Sensorelemente 5, also das Heizelement und der Temperatursensor, über ein monolithisches verbindungsnahtfreies Anschlusselement in Form eines Sensorgehäuse 4 an das Rohr 3 bzw. an den Sensorstutzen 2 des Rohres 3 angeordnet.

Nicht erfindungsgemäße Anschlusselemente sind auch aus dem Bereich der Ultraschall-Durchflussmessgeräte und aus dem Bereich der Vortex-Durchflussmessgeräte bekannt.

In Ultraschall-Durchflussmessgeräten kann es sich dabei um ein Element zur Minderung des Körperschalls handeln, welches das ultraschallerzeugende Element, z.B. den Ultraschallwandler trägt und mittels welchem dieser an einer Rohrwandung festgelegt ist. Auch an dieser Stelle kann im Anschluss an dieses Element zur Minderung des Körperschalls ein drucktragendes Bauteil, analog zu dem Bauteil 7 der Fig. 1, angeordnet sein. Dieses körperschallmindernde Element ist monolithisch und insbesondere durch eines der bereits vorbeschriebenen generativen Fertigungsverfahren herstellbar.

In Vortex-Messgeräten werden oftmals Kapazitive Sensoren, sogenannte DSC-Sensoren, eingesetzt. Um eine mechanische Verformung eines Sensorpaddels. bei Druckschlägen, zu vermeiden, empfiehlt es sich einen Anschlag vorzusehen. Dieser Anschlag kann beispielsweise in Käfig- oder Bügelform im Bereich des Sensorpaddels angeordnet sein und dessen Bewegung zusätzlich begrenzen. Auch dieses Element kann mittels eines generativen Fertigungsverfahrens hergestellt sein. Dieser Anschlag ist monolithisch und insbesondere durch eines der bereits vorbeschriebenen generativen Fertigungsverfahren herstellbar.

### Bezugszeichenliste

- 1: thermisches Durchflussmessgerät
- 2: Sensorstutzen
- 3: Rohr
- 4: Sensorgehäuse
- 5: Sensorelemente (Heizer und T-Sensor)
- 6: erste und zweite Stifthülse
- 7: drucktragendes Bauteil
- 8: Vergussmasse
- 9: Kabeldurchführung
- 10: Auswerteeinheit
- 11: Hinterschneidung
- 12: Hülse
- 13: Hohlkörper
- 14: Stirnfläche
- 15: Stufung
- 16: Abschnitt
- 17: Signal- & Energieversorgungsleitungen
- 18: Wandung
- 19: Abschnitt
- 20: Abschnitt
- 21: Schnittstelle

- p: Druck
- A: Längsachse der Hülse

## Patentansprüche

1. Thermisches Durchflussmessgerät, umfassend:
- ein messsignalerzeugendes Sensorelement (5);
- ein metallisches, in einem generativen Fertigungsverfahren gefertigtes Sensorgehäuse (4) eines thermischen Durchflussmessgerätes (1), welches das messsignalerzeugende Sensorelement (5) mit einer Öffnung oder mit einem Sensorstutzen (2) eines Rohres (3) verbindet,
**wobei** das monolithisch ausgebildete Sensorgehäuse (4) einen Hohlraumkörper (13) und zwei Stifthülsen (6) umfasst, welche aus dem Hohlkörper (13) hervorstehen,
**wobei** das messsignalerzeugendende Sensorelement (5) in einer der zwei Stifthülsen (6) angeordnet ist; und
- ein drucktragendes Bauteil;
**dadurch gekennzeichnet,**
**dass** das Sensorgehäuse (4) mit dem drucktragenden Bauteil (7) verbunden ist,
**wobei** das drucktragende Bauteil (7) eine Hülse (12) und eine Wandung (18) umfasst,
**wobei** sich die Wandung (18) in Parallelprojektion in Richtung einer Längsachse (A) der Hülse (12) über einen gesamten Querschnitt erstreckt,
**wobei** das drucktragende Bauteil (7) zumindest eine Kabeldurchführung (9) und eine Vergussmasse (8) aufweist,
**wobei** die Vergussmasse (8) die Hülse (12) teilweise oder vollständig ausfüllt, und **wobei** das drucktragende Bauteil (7) in der Öffnung oder im Sensorstutzen (2) des Rohres (3), bezogen auf die Längsachse des Rohres (3), radial hinter dem Anbindungselement angeordnet ist.

2. Thermisches Durchflussmessgerät nach Anspruch 1, **dadurch gekennzeichnet,**
**dass** das drucktragende Bauteil (7) zumindest ein Elektronikbauteil aufweist, welches in der Vergussmasse (8) eingebettet ist.

3. Thermisches Durchflussmessgerät nach Anspruch 1 und/oder 2, **dadurch gekennzeichnet,**
**dass** das metallische Sensorgehäuse (4) durch ein generatives Fertigungsverfahren, insbesondere durch ein SLM-Verfahren, aus einem granularen metallischen Material hergestellt ist oder durch ein MIM-Verfahren hergestellt ist.

4. Thermisches Durchflussmessgerät nach einem der Ansprüche 1 bis 3, **dadurch gekennzeichnet,**
**dass** das drucktragende Bauteil (7) eine oder mehrere Hinterschneidungen (11) an der Innenfläche der Hülse (12) zur Verankerung der Vergussmasse (8) aufweist.

5. Thermisches Durchflussmessgerät nach einem der Ansprüche 1 bis 4, **dadurch gekennzeichnet,**
**dass** die Hülse eine zylindrische Form aufweist und die Wandstärke der Wandung (18) bezogen auf einen Durchmesser eines Hülsenquerschnitts der Hülse (12) ein Verhältnis von vorzugsweise zumindest 1 zu 30, besonders bevorzugt von zumindest 1 zu 10, aufweist.

6. Thermisches Durchflussmessgerät nach einem der Ansprüche 1 bis 5, **dadurch gekennzeichnet,**
**dass** die Kabeldurchführung (9) zumindest als ein Loch in der Wandung (18) ausgebildet ist, welches Loch einen mittleren Lochdurchmesser von 0,2 bis 1,5 mm aufweist.

7. Thermisches Durchflussmessgerät nach einem der Ansprüche 1 bis 6, **dadurch gekennzeichnet,**
**dass** das drucktragende Bauteil (7) in der Öffnung des Rohres oder im Sensorstutzen (2) des Rohres (3) eingeschweißt und/oder eingeschraubt ist.

## Claims

1. Thermal flowmeter, comprising:
- a sensor element (5) that generates a measuring signal;
- a metal sensor housing (4) - made in a generative manufacturing process - of a thermal flowmeter (1), wherein said housing is connected to the sensor element (5) generating the measuring signal with an opening or with a sensor nozzle (2) of a tube (3), wherein the monolithic sensor housing (4) comprises a hollow body (13) and two pin sleeves (6) which project out of the hollow body (13),
wherein the sensor element (5) that generates the measuring signal is arranged in one of the two pin sleeves (6); and
- a pressure-bearing component;
**characterized in that**
the sensor housing (4) is connected to the pressure-bearing component (7),
the pressure-bearing component (7) comprises a sleeve (12) and a wall (18),
wherein the wall (18) extends in a parallel projection in the direction of a longitudinal axis (A) of the sleeve (12) over an entire cross-section,
wherein the pressure-bearing component (7) has at least a cable gland (9) and a potting compound (8),
wherein the potting compound (8) partially or completely fills the sleeve (12), and wherein the pressure-bearing component (7) is arranged in the opening or in the sensor nozzle (2) of the tube (3), radially behind the connection element in relation to the longitudinal axis of the tube (3).

2. Thermal flowmeter as claimed in Claim 1, **characterized in that**
the pressure-bearing component (7) has at least an electronic component that is embedded in the potting compound (8).

3. Thermal flowmeter as claimed in Claim 1 and/or Claim 2 wherein the metal housing of the sensor (4) is made from a granular metal material in a generative manufacturing process, particularly an SLM process, or is produced by a MIM process.

4. Thermal flowmeter as claimed in one of the Claims 1 to 3, **characterized in that**
the pressure-bearing component (7) has one or more undercuts (11) on the interior surface of the sleeve (12) to anchor the potting compound (8).

5. Thermal flowmeter as claimed in one of the Claims 1 to 4, **characterized in that**
the sleeve has a cylindrical form and the thickness of the wall (18) in relation to a diameter of a cross-section of the sleeve (12) has a ratio preferably of at least 1 to 30, particularly preferably of at least 1 to 10.

6. Thermal flowmeter as claimed in one of the Claims 1 to 5, **characterized in that**
the cable gland (9) is formed at least as a hole in the wall (18), wherein said hole has an average hole diameter of 0.2 to 1.5 mm.

7. Thermal flowmeter as claimed in one of the Claims 1 to 6, **characterized in that**
the pressure-bearing component (7) is welded in and/or screwed into the opening of the tube or the sensor nozzle (2) of the tube (3).

## Revendications

1. Débitmètre thermique, comprenant :
- un élément capteur (5) générant un signal de mesure ;
- un boîtier de capteur (4) - fabriqué par un procédé de fabrication générative - d'un débitmètre thermique (1), lequel boîtier relie l'élément capteur (5) qui génère le signal de mesure avec une ouverture ou avec un piquage de capteur (2) d'un tube (3),
le boîtier de capteur (4) de forme monolithique comprenant un corps creux (13) et deux douilles à broches (6) qui dépassent du corps creux (13),
l'élément capteur (5) qui génère le signal de mesure étant disposé dans l'une des deux douilles à broches (6) ; et
- un composant sous pression ;
**caractérisé**
**en ce que** le boîtier de capteur (4) est relié au composant sous pression (7),
le composant sous pression (7) comprenant une douille (12) et une paroi (18),
la paroi (18) s'étendant en projection parallèle dans la direction d'un axe longitudinal (A) de la douille (12) sur toute une section transversale,
le composant sous pression (7) présentant au moins un passage de câble (9) et une masse d'enrobage (8),
la masse d'enrobage (8) remplissant partiellement ou complètement la douille (12), et
le composant sous pression (7) étant disposé dans l'ouverture ou dans le piquage de capteur (2) du tube (3), radialement derrière l'élément de raccordement par rapport à l'axe longitudinal du tube (3).

2. Débitmètre thermique selon la revendication 1, **caractérisé**
**en ce que** le composant sous pression (7) comporte au moins un composant électronique qui est intégré dans la masse d'enrobage (8).

3. Débitmètre thermique selon la revendication 1 et/ou 2, **caractérisé**
**en ce que** le boîtier métallique de capteur (4) est fabriqué à partir d'un matériau métallique granulaire par un procédé de fabrication générative, notamment par un procédé SLM, ou est fabriqué par un procédé MIM.

4. Débitmètre thermique selon l'une des revendications 1 à 3, **caractérisé**
**en ce que** le composant sous pression (7) présente une ou plusieurs contre-dépouilles (11) sur la surface intérieure de la douille (12) pour ancrer la masse d'enrobage (8).

5. Débitmètre thermique selon l'une des revendications 1 à 4, **caractérisé**
**en ce que** la douille présente une forme cylindrique et l'épaisseur de la paroi (18) par rapport à un diamètre d'une section transversale de la douille (12) présente un rapport de préférence d'au moins 1 à 30, particulièrement de préférence d'au moins 1 à 10.

6. Débitmètre thermique selon l'une des revendications 1 à 5, **caractérisé**
**en ce que** le passe-câble (9) est formé au moins en tant que trou dans la paroi (18), lequel trou présente un diamètre moyen de 0,2 à 1,5 mm.

7. Débitmètre thermique selon l'une des revendications 1 à 6, **caractérisé**
**en ce que** le composant sous pression (7) est soudé et/ou vissé dans l'ouverture du tube ou dans le piquage de capteur (2) du tube (3).
